Europäisches Patentamt

European Patent Office

Office européen des brevets

(19)

(11) **EP 1 416 648 A1**

(12) **EUROPÄISCHE PATENTANMELDUNG**

(43) Veröffentlichungstag:
06.05.2004 Patentblatt 2004/19

(51) Int Cl.⁷: $H04B\ 7/26$

(21) Anmeldenummer: 02257475.0

(22) Anmeldetag: 28.10.2002

(84) Benannte Vertragsstaaten:
AT BE BG CH CY CZ DE DK EE ES FI FR GB GR
IE IT LI LU MC NL PT SE SK TR
Benannte Erstreckungsstaaten:
AL LT LV MK RO SI

(71) Anmelder: SIEMENS AKTIENGESELLSCHAFT
80333 München (DE)

(72) Erfinder:
• Ebner, Andre
  21073 Hamburg (DE)

• Halfmann, Ruediger
  67697 Otterberg (DE)
• Li, Hui, Dr.
  90489 Nürnberg (DE)
• Lott, Matthias
  81477 München (DE)
• Rohling, Hermann, Prof.
  38304 Wolfenbüttel (DE)
• Schulz, Egon, Dr.
  80993 München (DE)

(54) **Verfahren zur dezentralen Synchronisation in einem selbstorganisierenden Funkkommunikationssystem**

(57) Die Erfindung betrifft ein Verfahren zur Synchronisation in einem zumindest teilweise selbstorganisierenden Funkkommunikationssystem mit einer Anzahl von Mobilstationen, welche in gegenseitiger Funkreichweite über eine Luftschnittstelle liegen. Erfindungsgemäß übertragen zumindest einige Mobilstationen aus der Anzahl von Mobilstationen Synchronisationssequenzen, anhand deren sich ein Teil der oder alle Mobilstationen der Anzahl von Mobilstationen aufsynchronisieren.

## FIG 1

EP 1 416 648 A1

## Beschreibung

Die Erfindung betrifft ein Verfahren zur Synchronisation in einem zumindest teilweise selbstorganisierenden Funkkommunikationssystem mit einer Anzahl von Mobilstationen nach dem Oberbegriff des Anspruchs 1.

Die Erfindung betrifft ferner eine Mobilstation in einem zumindest teilweise selbstorganisierenden Funkkommunikationssystem nach dem Oberbegriff des Anspruchs 13, sowie ein Funkkommunikationssystem.

Kommunikationssysteme haben eine große Bedeutung im wirtschaftlichen, aber auch im privaten Bereich. Es sind starke Bestrebungen vorhanden, kabelgebundene Kommunikationssysteme mit Funkkommunikationssystemen zu verknüpfen. Die entstehenden hybriden Kommunikationssysteme führen zu einer Erhöhung der Zahl der zur Verfügung stehenden Dienste, ermöglichen aber auch eine größere Flexibilität auf Seiten der Kommunikation. So werden Geräte entwickelt, die unterschiedliche Systeme nutzen können (Multi Homing).

Den Funkkommunikationssystemen kommt dabei aufgrund der ermöglichten Mobilität der Teilnehmer eine große Bedeutung zu.

In Funkkommunikationssystemen werden Informationen (beispielsweise Sprache, Bildinformation, Videoinformation, SMS [Short Message Service] oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen SMS (Short Message Service) als auch digitale Daten.

Für zukünftige Mobilfunksysteme mit CDMA- oder TD/CDMA-Übertragungsverfahren, wie beispielsweise UMTS (Universal Mobile Telecommunication System) oder andere Systeme der dritten Generation, sind Frequenzen im Frequenzband von ca. 2000 MHz vorgesehen. Diese Systeme der dritten Generation werden entwickelt mit den Zielen weltweiter Funkabdeckung, einem großen Angebot an Diensten zur Datenübertragung und vor allem eine flexible Verwaltung der Kapazität der Funkschnittstelle, die bei Funk-Kommunikationssystemen die Schnittstelle mit den geringsten Ressourcen ist. Bei diesen Funk-Kommunikationssystemen soll es vor allem durch die flexible Verwaltung der Funkschnittstelle möglich sein, dass einer Teilnehmerstation bei Bedarf eine große Datenmenge mit hoher Datengeschwindigkeit senden und/oder empfangen kann.

Der Zugriff von Stationen auf die gemeinsamen Funkressourcen des Übertragungsmedium, wie zum Beispiel Zeit, Frequenz, Leistung oder Raum, wird bei diesen Funk-Kommunikationssystemen durch Vielfachzugriffsverfahren (Multiple Access, MA) geregelt.

Bei Zeitbereichs-Vielfachzugriffsverfahren (TDMA) wird jedes Sende- und Empfangsfrequenzband in Zeitschlitze unterteilt, wobei ein oder mehrere zyklisch wiederholte Zeitschlitze den Stationen zugeteilt werden. Durch TDMA wird die Funkressource Zeit stationsspezifisch separiert.

Bei Frequenzbereichs-Vielfachzugriffsverfahren (FDMA) wird der gesamte Frequenzbereich in schmalbandige Bereiche unterteilt, wobei ein oder mehrere schmalbandige Frequenzbänder den Stationen zugeteilt werden. Durch FDMA wird die Funkressource Frequenz stationsspezifisch separiert.

Bei Codebereichs-Vielfachzugriffsverfahren (CDMA) wird durch einen Spreizcode, der aus vielen einzelnen sogenannten Chips besteht, die zu übertragende Leistung/Information stationsspezifisch codiert, wodurch die zu übertragende Leistung codebedingt zufällig über einen großen Frequenzbereich gespreizt wird. Die von unterschiedlichen Stationen benutzen Spreizcodes innerhalb einer Zelle/Basisstation sind jeweils gegenseitig orthogonal oder im wesentlichen orthogonal, wodurch ein Empfänger die ihm zugedachte Signalleistung erkennt und andere Signale unterdrückt. Durch CDMA wird die Funkressource Leistung durch Spreizcodes stationsspezifisch separiert.

Bei orthogonalen Frequenz-Vielfachzugriffsverfahren (OFDM) werden die Daten breitbandig übermittelt, wobei das Frequenzband in äquidistante, orthogonale Unterträger eingeteilt wird, so dass die simultane Phasenverschiebung der Unterträger einen zwei-dimensionalen Datenfluss im Zeit-Frequenz Bereich aufspannt. Durch OFDM wird die Funkressource Frequenz mittels orthogonalen Unterträgern stationsspezifisch separiert. Die während einer Zeiteinheit auf den orthogonalen Unterträgern übermittelten zusammengefassten Datensymbole werden als OFDM Symbole bezeichnet.

Die Vielfachzugriffsverfahren können kombiniert werden. So benutzen viele Funkkommunikationssysteme eine Kombination der TDMA und FDMA Verfahren, wobei jedes schmalbandige Frequenzband in Zeitschlitze unterteilt ist.

Für das erwähnte UMTS-Mobilfunksystem wird zwischen einem sogenannten FDD-Modus (Frequency Division Duplex) und einem TDD-Modus (Time Division Duplex) unterschieden. Der TDD-Modus zeichnet sich insbesondere dadurch aus, dass ein gemeinsames Frequenzband sowohl für die Signalübertragung in Aufwärtsrichtung (UL - Uplink) als auch in Abwärtsrichtung (DL - Downlink) genutzt wird, während der FDD-Modus für die beiden Übertragungsrichtungen jeweils ein unterschiedliches Frequenzband nutzt.

In Funkkommunikationsverbindungen der zweiten und/oder dritten Generation können Informationen kanalvermittelt (CS Circuit Switched) oder paketvermittelt (PS Packet Switched) übertragen werden.

Die Verbindung zwischen den einzelnen Stationen erfolgt über eine Funkkommunikations-Schnittstelle (Luftschnittstelle). Basisstation und Funknetzwerkkontrolleinrichtung sind üblicherweise Bestandteile eines Basisstationssubsystems (RNS Radio Network Subsystem). Ein zellulares Funkkommunikationssystem umfasst in der Regel mehrere Basisstationssubsysteme, die an ein Kernnetz (CN Core Network) angeschlossen sind. Dabei ist die Funknetzwerkkontrolleinrichtung des Basisstationssubsystems in der Regel mit einer Zugangseinrichtung des Kernnetzes verbunden.

Neben diesen hierarchisch organisierten zellularen Funkkommunikationssystemen gewinnen selbstorganisierende drahtlose Funkkommunikationssysteme - beispielsweise sogenannte Ad Hoc Systeme - zunehmend an Bedeutung, auch in zellularen Funkkommunikationssystemen.

Selbstorganisierende Funkkommunikationssysteme erlauben im allgemeinen auch die direkte Kommunikation zwischen mobilen Endgeräten und besitzen nicht notwendigerweise eine zentrale Instanz, die den Zugriff auf das Übertragungsmedium steuert.

Selbstorganisierende Funkkommunikationssysteme ermöglichen, dass Datenpakete direkt zwischen beweglichen Funkstationen ohne Mitwirkung von Basisstationen ausgetauscht werden können. In einem solchen Funknetz ist folglich eine Infrastruktur in Form von Basisstationen innerhalb einer zellularen Struktur nicht erforderlich. Stattdessen können Datenpakete zwischen beweglichen Funkstationen ausgetauscht werden, die sich zueinander in Funkreichweite befinden. Um den Austausch von Datenpaketen grundsätzlich zu ermöglichen, ist eine Synchronisation zwischen den in der Regel beweglichen Funkstationen erforderlich. Im Falle einer drahtlosen Übertragung über elektromagnetische Wellen bedeutet dies z.B. den Abgleich von Trägerfrequenz (Frequenzsynchronisation) und Zeitraster (Zeitsynchronisation).

Für die Synchronisation in mobilen Datenfunknetzen sind unterschiedliche Lösungen denkbar. So können die Mobilstationen über eine gemeinsame Referenz verfügen, die z.B. über GPS übertragen wird. Es gibt somit im System eine global bekannte Zeitinformation, nach der sich alle Mobilstationen richten können (z.B. VDL Mode 4, bzw. WO 93/01576, "A Position Indicating System"). Nachteilig an diesem Verfahren ist zum einen, dass alle Mobilstationen über einen kostenintensiven GPS-Empfänger verfügen müssen. Zum anderen ist der Empfang von GPS-Signalen z. B. in Gebäuden nicht immer voll gewährleistet. Andere Systeme wiederum, wie z.B. TETRA, gewährleisten die Auswahl eines Masters, der die Funktion eines "Taktgebers' für den ihm zugeordneten Frequenzbereich übernimmt. Eine hohe Granularität über die Zeit (TDMA) und/oder den Code (CDMA) scheidet bei solchen Verfahren allerdings aus. Für die Separierung der Teilnehmer wird hier vorzugsweise eine FDMA Komponente eingesetzt. Eine dritte Gruppe von Systemen wiederum, wie z.B. IEEE802.11 verzichten auf ein gemeinsames Zeitraster. Die Mobilstationen synchronisieren sich in Form einer One-Shot-Synchronisation auf den jeweils empfangenen Datenburst. Hier ist allerdings eine Reservierung von Ressourcen in Form von Zeitschlitzen zur Gewährleistung der QoS nicht mehr möglich.

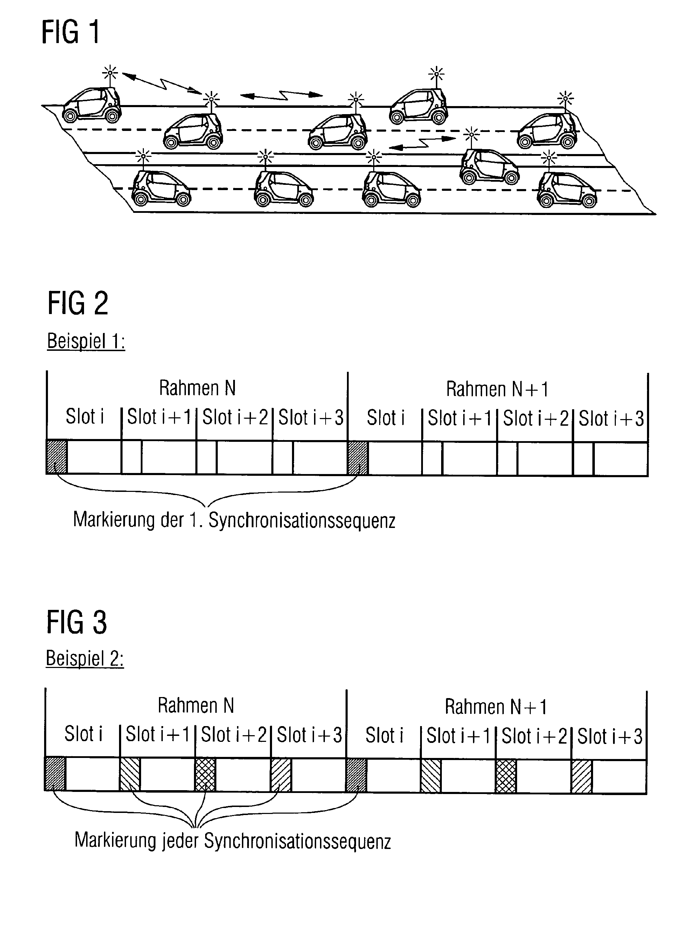

Der Erfindung liegt die Aufgabe zugrunde, ein Verfahren, eine Mobilstation und Funkkommunikationssystem der eingangs genannten Art aufzuzeigen, welche eine zeitliche Synchronisation zwischen beweglichen Funkstationen für ein selbstorganisierendes Datenfunknetz ermöglichen, ohne dass hierfür eine zellulare Infrastruktur vorhanden sein muss. Die Synchronisation sollte nicht auf GPS angewiesen und dezentral organisierbar sein. Trotzdem sollte eine Rahmenstruktur in einer stark zeitvarianten Netztopologie unterstützt werden können, denn es sollte insbesondere die Synchronisation bei hoher Mobilität der Teilnehmer ermöglicht werden, d.h. bei starker Fluktuation der Netzwerktopologie (z.B. bei Mobilstationen in sich bewegenden Fahrzeugen, vgl. Fig. 1). Zusätzlich sollte in einem weiteren Schritt die Vereinigung asynchron laufender Cluster hinsichtlich der Synchronisation betrachtet werden, wobei in gegenseitiger Funkreichweite liegende Mobilstationen als Cluster bezeichnet werden.

Die Aufgabe wird für das Verfahren mit den Merkmalen des Anspruchs 1, für die Mobilstation mit den Merkmalen des Anspruchs 13 und für das Funkkommunikationssystem mit den Merkmalen des Anspruchs 15 gelöst.

Vorteilhafte Ausgestaltung und Weiterbildungen sind Gegenstand der abhängigen Ansprüche.

Erfindungsgemäß werden zumindest einige Mobilstationen aus der Anzahl von Mobilstationen Synchronisationssequenzen übertragen, anhand deren sich ein Teil der oder alle Mobilstationen der Anzahl von Mobilstationen aufsynchronisieren.

Aufgrund der Unabhängigkeit der Synchronisation von der zellularen Infrastruktur und insbesondere von Basisstationen erfolgt die Synchronisation dezentral. Die Teilnehmerstationen können, müssen aber nicht mobil sein. Im folgenden werden diese Teilnehmerstationen als Mobilstationen bezeichnet.

Die Erfindung ist insbesondere für TDD/TDMA basierte Technologien - wie sie derzeit für die nächste Generation der Mobilkommunikation diskutiert werden - geeignet. Beispielsweise kann die Erfindung mit Vorteil bei einer Variante der (aktuellen) 3. Generation der Mobilkommunikation eingesetzt werden, denn die dezentral organisierte Synchronisation für hochmobile Datenfunknetze kann für die Low Chip Rate (LCR) Variante von UTRA TDD realisiert werden. Portierung der Algorithmen auf TSM bzw. HCR sind einfach umzusetzen. Darüber hinaus ist auch die Anwendung auf andere zeitschlitzorientierte Access-Systeme, wie z.B. DECT, möglich.

In selbstorganisierenden Funknetzen mit einer zentral organisierten Synchronisation übernimmt - innerhalb eines Clusters - eine Mobilstation die Funktion des Taktgebers. Diese Rolle kann zu Beginn des Netzaufbaus festgelegt werden. Sie kann aber auch von zeitlich begrenzter Dauer sein. Protokollmechanismen, die die Auswahl der entsprechenden Mobilstation organisieren sind bekannt (vgl. z.B. HIPERLAN2).

Bei einer dezentral organisierten Synchronisation nach der vorliegenden Erfindung übernimmt nicht eine einzelne Mobilstation die Funktion des Taktgebers, sondern eine Teilmenge aller beteiligten Mobilstationen. Im Grenzfall können sogar alle Mobilstationen zur Aufrechterhaltung der Synchronisation herangezogen werden.

Neben den eigentlichen Nutzdaten übertragen diese Mobilstationen auch Synchronisationssequenzen. Die Synchronisationssequenzen können dabei Teil eines informationstragenden Datenpaketes sein. Sie können aber auch separat durch einen eigenen d.h. von der Nutzdatenübertagung separaten Synchronisationskanal, der über Frequenz, Zeit und/oder Code-Multiplex definiert wird, dem Funknetz zur Verfügung gestellt werden.

Aufsynchronisierende Mobilstationen detektieren die Synchronisationslagen $T_{SYNC,i}$ der anderen Mobilstationen und leiten ihre eigene Synchronisationslage aus diesen ab. Die Güte der einzelnen detektierten Synchronisationslagen - die z.B. aus deren Empfangssignalstärke abgeleitet werden kann - kann dabei ebenso berücksichtigt werden, wie die vorhergehende Synchronisationslage der aufsynchronisierenden Mobilstation.

Für die zeitliche Synchronisationslage $T_{SYNC}$ kann beispielhaft der folgende Zusammenhang angesetzt werden:

$$T_{SYNC} = \alpha \cdot T_{SYNC,old} + \frac{1-\alpha}{\sum_i g_i} \sum_i g_i \cdot T_{SYNC,i} ; 0 \le \alpha \le 1$$

Dabei ist $\alpha$ ein Gewichtungsfaktor für die vorhergehende Synchronisationslage $T_{SYNCold}$ der aufsynchronisierenden Mobilstation. Für die Gewichtung $g_i$ der aktuell detektierten Synchronisationslagen der anderen Mobiles i gibt es unterschiedliche Strategien. Es werden nachfolgend exemplarisch zwei aufgeführt:

1.) Detektion des Maximum:

$$g_i = \begin{cases} 1 & \textit{für } \max \textit{.Empf .pegel} \\ 0 & \textit{sonst} \end{cases}$$

2.) Gewichtung mit dem Empfangspegel

Es hat sich gezeigt, dass für die Konvergenz der dezentralen Synchronisation die Berücksichtigung der vorhergehenden Synchronisationszeitpunkte von besonderer Bedeutung ist und daher bevorzugt für die Bestimmung in Kombination mit Synchronisationslagen der anderen Mobil eingesetzt wird. Auf diese Weise kann der Schätzwert 'kontinuierlich' verbessert werden.

Da der Synchronisationszeitpunkt einer Mobilstation i.a. aus mehreren Referenzen abgeleitet wird, die Signallaufzeiten auf Grund der unterschiedlichen Distanzen zwischen den einzelnen Mobiles allerdings sehr unterschiedlich sein können, ist im Gegensatz zur Synchronisation in einem zentral organisierten Netz (z.B. mit einer Basisstation) die Varianz der Synchronisationslage möglicherweise höher. Dies kann bei der Dimensionierung der entsprechenden Guard-Intervalle berücksichtigt werden. Bei einer Reichweite von 1 km z.B. ergibt sich allein auf Grund der Laufzeitdifferenzen eine zusätzliche Toleranz von bis zu 3 µs, die kompensiert werden sollte.

Im folgenden werden einige Ausführungsvarianten beschrieben:

A. Das Aussenden der Synchronisationsdaten kann im gleichen Burst, der auch die Daten trägt, erfolgen. Die Lage (z.B. als Pre- oder Mid-Ambel) der Synchronisationsdaten zur eigentlichen Datensequenz ist dabei irrelevant.

B. Das Verfahren ist nicht an eine gemeinsame Übertragung von Synchronisationsdaten und der eigentlichen Datensequenz gebunden. Die Synchronisationsdaten können wahlweise auch über einen weiteren Burst, der durch eine CDMA, TDMA oder aber auch FDMA Komponente vom eigentlichen Datenburst separiert wird, übertragen werden. Entscheidend ist lediglich, dass die relative Lage dieser Bursts zum eigentlichen Datenburst eindeutig festgelegt sein muss.

C. Für eine Aufrechterhaltung der Synchronisation ist die zyklische (nicht notwendigerweise periodische) Aussendung der Synchronisationssequenz bedeutend. Ein, mehrere oder aber auch alle Mobiles müssen gewährleisten, dass dieser ,Dienst' der Luftschnittstelle zur Verfügung gestellt wird. Dies gilt insbesondere auch dann, wenn keines der beteiligten Mobiles Nutzdaten überträgt. Das zyklische Aussenden eines Burst - im folgenden auch als Beacon bezeichnet, der unter anderem auch die Synchronisationsfolge trägt, ist sowohl für die dezentrale Synchronisation gemäß dem hier beschriebenen Verfahren, als auch die Organisation des selbstorganisierenden Netzes - z. B. zur Identifikation der innerhalb der Funkreichweite liegenden Nachbarn, sowie der Aktualisierung der 'Nachbarliste' - von außerordentlichem Vorteil.

D. Jede Mobilstation leitet ihren eigenen Referenztakt aus den Synchronisationssignalen der Mobilstationen ab, die innerhalb ihrer Synchronisationsreichweite liegen. Die Qualität und Güte dieser Referenzen kann sehr unterschiedlich sein. Während eine der Mobilstationen als Referenz auch ein GPS Signal verwendet, kann eine andere lediglich ihren Referenztakt aus den Empfangssignalen der anderen Mobilstationen ableiten. Zur Verbesserung der Synchronisation kann z.B. im Beacon ein Maß für die Qualität der Referenz angegeben werden, was dann bei der Berechnung des optimalen Abtastzeitpunktes durch eine entsprechende Gewichtung berücksichtigt werden kann.

E. Für Zugriffsverfahren, die mehrere Zeitschlitze in einem Rahmen oder aber sogar mehrere Rahmen zu sogenannten Superrahmen zusammenfassen, müssen Mechanismen definiert werden, die eine Rahmensynchronisation unterstützen. Hier bietet es sich an, die jeweiligen Zeitschlitze zu markieren, so daß aus der Markierung auf die Lage im jeweiligen Rahmen rückgeschlossen werden kann.

Eine einfache Möglichkeit besteht z.B. in der Verwendung einer anderen Synchronisationssequenz für den ersten Zeitschlitz, wie in Beispiel 1 in **Fig. 2** gezeigt. Fig. 2 zeigt die Markierung der Synchronisationssequenz zur Rahmensynchronisation zu Beispiel 1. Nachteilig bei diesem Verfahren ist allerdings die relativ hohe Dauer für das , Auffinden des Rahmenanfangs. Im ungünstigsten Falle muss die komplette Rahmendauer gewartet werden, bis sich die entsprechende, den Rahmen definierende Sequenz wiederholt (vorausgesetzt es wird dafür Sorge getragen, dass zumindest einer der Teilnehmer einen Beacon im ersten Zeitschlitz generiert). Eine schnellere Möglichkeit zur Rahmensynchronisation zeigt Beispiel 2 in **Fig. 3**. Fig. 3 zeigt die Markierung der Synchronisationssequenz zur Rahmensynchronisation zu Beispiel 2. Hier ist die Synchronisationsfolge immer abhängig von der Position im Rahmen, d.h. jedem Zeitschlitz wird eine eindeutige Synchronisationsfolge zugeteilt (bzw. ein Satz von eindeutigen Synchronisationsfolgen). Die Zeitschlitzsynchronisation liefert damit inhärent auch die Rahmensynchronisation. Nachteilig ist hier allerdings der hohe numerische Aufwand, da für jede eigenständige Synchronisationsfolge ein eigener Korrelator bedient werden muss.

Sequential Synchronisation - Joint Synchronisation:

Die dezentrale Synchronisation zeichnet sich dadurch aus, daß die Synchronisationssequenzen nicht von einer einzelnen Mobilstation, sondern von mehreren Mobilstationen gesendet werden können. Grundsätzlich können die Synchronisationssequenzen der unterschiedlichen Mobilstationen unterschiedliche oder aber die gleiche Funkressource (die festgelegt ist durch Frequenzband, Zeitschlitz und/oder Code) belegen. Demnach werden zwei Typen der dezentralen Synchronisation im Rahmen dieser Erfindung unterschieden:

- Sequential Synchronisation
- Joint Synchronisation

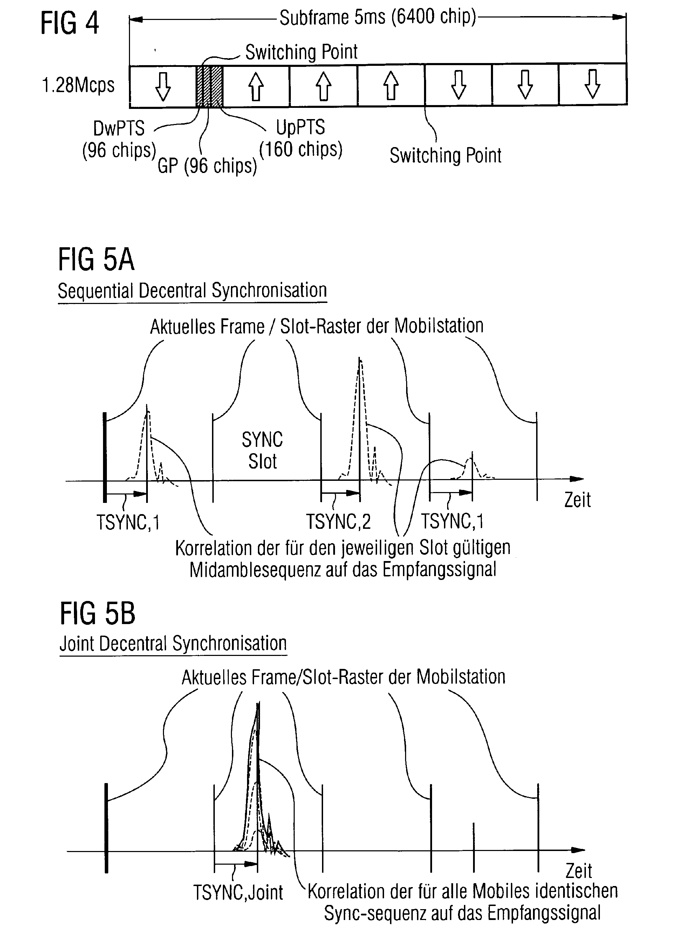

Zur Erläuterung soll für beide Modi eine dezentrale Synchronisation auf Basis der von der 3GPP definierten Rahmenstruktur für den UTRA-TDD Modus (Low Chip Rate) erläutert werden. Dies ist in Fig. 4 skizziert [3GPP TS 25.221 V4.1.0].

Ergänzend zu Fig. 4 ist anzugeben:

Time slot#n (n from 0 to 6): the $n^{th}$ traffic time slot, 864 chips duration;
DwPTS: downlink pilot time slot, 96 chips duration;
UpPTS: uplink pilot time slot, 160 chips duration;
GP: main guard period for TDD operation, 96 chips duration;

Der gewählte Rahmenaufbau ist auch für TSM gültig. Eine Portierung auf die High Chip Rate Variante von UTRA-TDD ist problemlos möglich.

Sequential Synchronisation:

Die Rahmenstruktur von UTRA-TDD wurde für den Betrieb in zellularen Netzen optimiert. Für den Betrieb in einem selbstorganisierenden Funknetz sind leichte Modifikationen erforderlich. Unter anderem wird für die Lösung der Power Impairment Problematik vorgeschlagen, dass innerhalb eines Zeitschlitzes nur eine Mobilstation den Sendebetrieb aufnehmen darf. Die bis zu 16 unterschiedlichen Codes werden dann verwendet, um unterschiedliche Empfangs-Mobiles zu adressieren. Da ständig in einer Art 'Down-Link Mode' operiert wird, kann auf unterschiedliche Midambeln innerhalb eines Zeitschlitzes verzichtet werden, da jedes der empfangenden Mobiles nur auf die Schätzung eines einzigen Kanals angewiesen ist. Durch die Korrelation auf die charakteristische Midambel des jeweiligen Zeitschlitzes, kann das Timing des jeweiligen Mobiles in Relation zum eigenen Timing festgestellt werden. Die Mittelung über die gefundenen Synchronisationslagen gibt dann ein Maß dafür an, wie weit das eigene 'Zeitraster' angeglichen werden muss. Zur Aufwandsreduktion kann in allen Zeitschlitzen mit der gleichen Midambel operiert werden. Für die Rahmensynchronisation ist es allerdings erforderlich einen Slot gesondert zu markieren, indem z.B. für diesen Slot eine gesonderte Synchronoisationssequenz ausgewiesen wird. Es ist weiterhin in diesem Fall dafür Sorge zu tragen, dass dieser Slot immer von einer Mobilstation genutzt wird, da sonst die Rahmensynchronisation nicht aufrecht erhalten werden kann.

Joint Synchronisation:

Zusätzlich zum eigentlichen datentragenden Burst wird hier von einem Teil der Mobiles die gleiche Synchronisationssequenz/Beacon gleichzeitig in einem gesonderten Zeitschlitz gesendet. Dies vereinfacht den Aufwand für die Synchronisation erheblich.

- Die Rahmensynchronisation ist impliziter Bestandteil des Algorithmus
- Aufwendige Mittelwertbildung zum Auffinden der eigenen Sync.Lage entfällt. Die Mittelung erfolgt gewissermaßen auf dem Übertragungsmedium durch die Überlagerung der die Synchronisationssequenzen tragenden Signale.
- Der Synchronisationsmechanismus ist - abgesehen davon, dass das Mobile zeitweise selbst die Sync.-Sequenz abstrahlt - völlig identisch zum Betrieb im zellularen Fall.

Im Falle von UTRA-TDD LCR stehen zwei gesonderte Synchronisations-Zeitschlitze zur Verfügung. Beide könnten im Falle der Joint Synchronisation sinnvoll eingesetzt werden. Eine Zeitschlitz wird zum Empfang der Synchronisationsfolge der umgebenden Mobiles eingesetzt, der andere zum Senden einer eigenen Synchronisationsfolge. Damit senden alle

Mobiles in jedem Rahmen einmal ihre Synchronisationsfolge aus und sind gleichzeitig einmal in der Lage sich auf ihre Umgebung aufzusynchronisieren. Bei der Aufsynchronisation eines Mobiles auf ein bereits bestehendes Cluster wäre es allerdings - als Ausnahme von dieser Regel - möglich beide Synchronisationszeitschlitze im Empfangsmodus zu betreiben. Zur Differenzierung der Synchronisationszeitschlitze wird dem ersten und zweiten Zeitschlitz eine unterschiedliche Synchronisationssequenz zugeteilt. Jedes Mobile sollte die Aussendung seiner Synchronisationsfolge dem Zeitschlitz zuordnen, der die geringere Empfangsleistung aufweist, damit wird eine näherungsweise gleichmäßige Zuteilung der Mobiles zu beiden Zeitschlitzen gewährleistet. Insbesondere beim Aufbau des Clusters wird das zweite aktive Mobile dem nicht besetzten Zeitschlitz zugeordnet.

Zur Erläuterung von Sequential und Joint Decentral Synchronisation siehe die **Fig. 5.** Im oberen Teil Fig. 5A von Fig. 5 ist die Sequential Decentral Synchronisation und im unteren Teil Fig. 5B die Joint Decentral Synchronisation dargestellt.

Nachfolgend wird die Synchronisation von asynchronen Clustern/Stationen betrachtet. Dabei wird das Prinzip der Schutz-Zone angewendet.

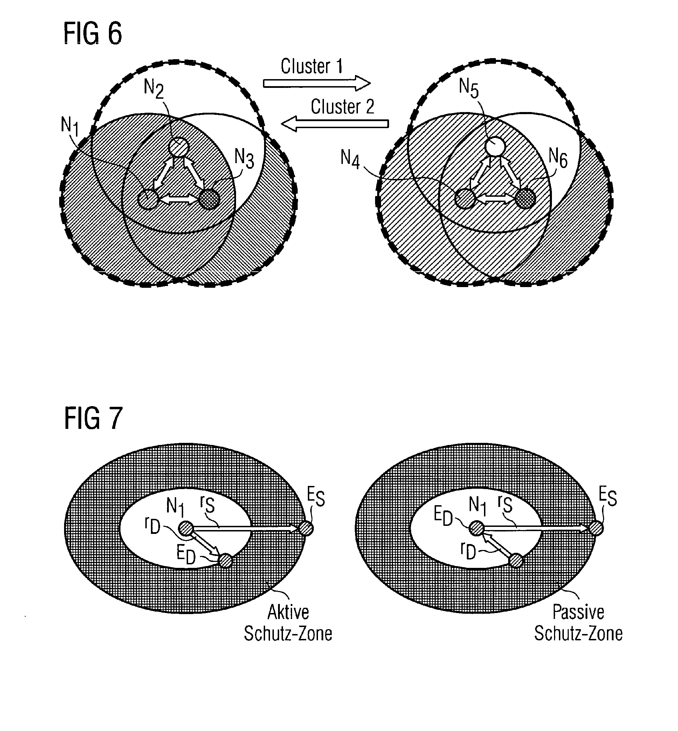

Eine der wesentlichen Herausforderungen, die die Synchronisation in mobilen selbstorganisiernden Netzen stellt, veranschaulicht **Fig. 6.** Hier werden unabhängig voneinander 2 Cluster (mit jeweils 3 Stationen) aufgebaut, die auf Grund ihrer Entfernung (beide Cluster liegen außerhalb ihrer gegenseitigen Funkreichweite) asynchron zueinander betrieben werden können. Ohne eine Referenz, wie z.B. GPS oder die Basisstation eines Mobilfunksystems, kann ein synchroner Gleichlauf beider Cluster nicht garantiert werden. Im Rahmen dieser Erfindung soll ein Verfahren beschrieben werden, das - insbesondere im Falle von ‚sich vereinigenden' Clustern - einen ‚lokalen' Abgleich der Synchronisationsparameter erzielt, noch bevor es zu einem Austausch von Daten zwischen den Mobiles der unterschiedlichen Cluster kommt.

Die aufgezeigte Lösung gilt für selbstorganisierende Funknetze mit einer zentral organisierten Synchronisation, aber auch unabhängig davon.

Datenfunkreichweite und Synchronisationsreichweite:

Die Datenfunkreichweite soll dabei als die Reichweite definiert werden, in der ein potentieller Empfänger eine festgelegte BER ‚gerade noch' gewährleisten kann. Entsprechend wird die Synchronisationsreichweite, als die Reichweite definiert, in der die korrekte Detektion der Synchronisationsparameter, wie z.B. der Zeitlage, durch einen potentiellen Empfänger mit einer bestimmten Wahrscheinlichkeit gewährleistet werden kann.

Schutz-Zone:

Erfindungsgemäß soll die Synchronisationsreichweite einer Stationen größer sein als die resultierende Reichweite der Nutzdaten ("Datenfunkreichweite"). Die Überreichweite der Synchronisationsinformation definiert dabei die sogenannte Schutzzone, die vorteilhaft genutzt werden kann, um einen lokalen Gleichlauf bestimmter Systemparameter zu erzielen, bevor der Datenaustausch zwischen den Stationen des gleichen Clusters durch die Transmissionen einer oder mehrerer Stationen des zweiten, sich nähernden Clusters signifikant gestört wird.

**Fig. 7** verdeutlicht das Prinzip einerseits einer aktiven Schutz-Zone und andererseits einer passiven Schutz-Zone.

Je nachdem ob die referenzierte Stationen als Sender oder aber als Empfänger arbeitet, spricht man von aktiver bzw. passiver Schutz-Zone. Im ersteren Fall gewährleistet die Schutz-Zone, dass alle Stationen innerhalb der Datenfunkreichweite, die von der Stationen N1 gesendeten Daten empfangen; im zweiten Fall, dass alle Stationen innerhalb der Datenfunkreichweite der Stationen N1 die Daten zustellen können ohne dass eine asynchron laufendes zweites Cluster zu Störungen führen kann.

Das Ziel einer höheren Synchronisationsreichweite gegenüber der Datenfunkreichweite kann technisch durch folgende Verfahren (angewandt auf die Synchronisationsfolge) realisiert werden:

- Höhere Sendeleistung (Lage in einem separaten Frequenzband erforderlich)
- niedrigerer Modulationsindex
- höherer Spreizfaktor bei Einsatz von Bandspreiztechniken
- höhere Empfängerempfindlichkeit
- (optionale) Festlegung eines minimal benötigten Empfangspegels für die Datendetektion

Veranschaulichung der Schutz-Zone am Beispiel von UTRA TDD LCR:

In den folgenden Ausführungen sollen die Anforderungen an eine aktive bzw. passive Schutz-Zone detaillierter für den Fall eines selbstorganisierenden Netzes auf Basis von UTRA TDD LCR betrachtet werden. Folgende Annahmen wurden getroffen:

- die Sendeleistung S aller Stationen sei gleich groß (UE class 2 : 250mW : 24dBm)

- die Sendeleistung von Datenburst und Synchronisationsburst sei gleich groß

- der Spreizfaktor für die Daten sei max. 16; der für die Synchronisation 144

- der Signal-Stör-Abstand (SNR) ..

  .. für eine mit einer Wahrscheinlichkeit von 95% erfolgreiche Synchronisation liegt bei $\delta_s$ = - 7.0 dB
  .. für die Daten-Detektion $\delta_D$ - eine Packet Error Rate von <$10^{-2}$ soll garantiert werden - liegt bei max. $\delta_D$ = 7 dB, womit sich ein Abstand von $\Delta\delta = \delta_D - \delta_S$ = 14 dB ergibt.

- die Empfängerempfindlichkeit $E_{D0}$ für die Daten liege entsprechend dem Standard bei $E_{D0}$ = -105 dBm. Die Empfängerempfindlichkeit für die Synchronisation ist um $\Delta\delta$ empfindlicher als $E_{D0}$ und liegt demnach bei Es = $E_{D0} - \Delta\delta$. Zur Reduktion der Datenreichweite kann (optional) der benötigte Empfangspegel für die Datendetektion $E_D$ um $\varepsilon_D$ > 0 dB angehoben werden, d.h. $E_D = E_{D0} + \varepsilon_D$ = -105 dBm + $\varepsilon_D$. Im folgenden werden zwei Beispiele gezeigt, wobei im ersten die Anhebung des Empfangspegels notwendig ist, um die Schutzzone aufrecht zu erhalten und wo im zweiten auf die Anhebung des Pegels verzichtet und damit eine höhere Reichweite erzielt werden kann.

Die Synchronisationsreichweite wird durch die Differenz aus Sendepegel und Empfängerempfindlichkeit $E_S$ festgelegt, das Link-Budget für die Sync. ergibt sich demnach zu

$$\xi_S = S - E_S = S - E_{D0} + \Delta\delta$$

$$= 129 \text{ dB} + \Delta\delta.$$

Entsprechend gilt für die Datenreichweite

$$\xi_D = S - E_D = S - E_{D0} - \varepsilon_D = \xi_S - \Delta\delta - \varepsilon_D$$

$$= 129 \text{ dB} - \varepsilon_D.$$

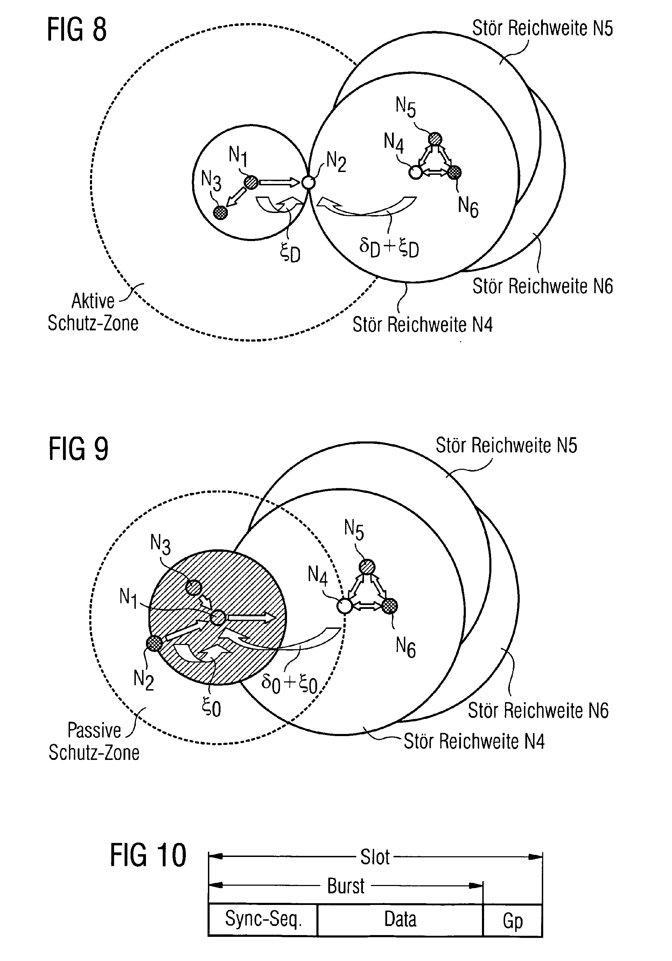

Dazu ist die Darstellung in **Fig. 8** zu betrachten.

Die Anforderungen an eine aktive Schutz-Zone sollen an Hand obiger Abbildung kurz erläutert werden. Mit der Transmission eines Datenbursts durch die Stationen $N_1$ wird sowohl die Datenreichweite als auch - durch die gleichzeitige Emission der Midambel - die Sync.-Reichweite und damit die Schutz-Zone (für die Station $N_1$) festgelegt. Eine Station $N_2$ liege in Datenfunkreichweite von $N_1$. Die Störleistung eines potentiellen Störers (Station $N_4$) soll um $\delta_D$ niedriger liegen als die Empfangsleistung, des von der Station $N_1$ übertragenen Datenpakets. Der Path Loss zwischen Empfangs-Station $N_2$ und potentiellem Störer $N_4$ sollte dementsprechend $\delta_D + \xi_D$ betragen. Auf Grund der unterschiedlichen Ausbreitungswege zw. $N_1$ und $N_2$ respektive zw. $N_4$ und $N_2$ muss die Synchronisationsreichweite mindestens $\xi_S = 2\xi_D + \delta_D$ betragen. Damit muß der notwendige Pegel für den Datenempfang um $\varepsilon_D = 0.5 \, (S - E_{D0} + \delta_S) = 61$ dB auf $E_D = -44$ dBm angehoben werden. Mit einer Freiraumdämpfung von

$$\rho/dB = 32.44 + 20\log_{10}(r/km) + 20\log_{10}(f_c/MHz)$$

ergibt sich damit eine Datenreichweite < 50 m.

Die Darstellung in **Fig. 9** zeigt folgendes:

Im Gegensatz zur aktiven Schutz-Zone schützt die passive nicht den Datenempfang einer dritten Station, die innerhalb der Datenreichweite von $N_1$ liegt, sondern garantiert vielmehr, dass eine Datenübertragung von Stationen wie $N_2$, $N_3$ zu $N_1$ durch das sich nähernde zweite Cluster aus den Nodes $N_4$, $N_5$, $N_6$ nicht signifikant gestört wird. Dies vereinfacht die Anforderungen an die Schutz-Zone erheblich. Die Synchronisationsreichweite muss hier lediglich einen Abstand von

$$\xi_S = \xi_D + \delta_D$$

garantieren. Damit gilt für die Anhebung der Empfängerempfindlichkeit auf einen minimalen Empfangspegel für die Datendetektion $\varepsilon_D = \delta_S < 0$ dB. Eine Anhebung der

Empfängerempfindlichkeit ist hiermit nicht erforderlich. Es verbleibt eine Reserve von 7 dB. Die erzielbaren Daten-Reichweiten liegen deutlich über 10 km.

Dabei ist folgendes festzuhalten:

- Mit einer passiven Schutz-Zone lassen sich wesentlich höhere Reichweiten erzielen als bei Verwendung eines aktiven.
- Der Aufwand für die Synchronisation ist bei der passiven Schutz-Zone wesentlich höher. Die passive Schutz-Zone muß einen potentiellen Sender ‚schützen', was die ständige/zyklische Transmission seiner Sync-Sequenz erforderlich macht. Dies gilt im Prinzip für alle Stationen eines Clusters. Die aktive Schutz-Zone hingegen muss nur für die entsprechende Station kurz bevor die Transmission erfolgt aufgebaut werden. Zur effizienten Ausnutzung der Funkresourcen sollte die passive Schutz-Zone mit einer Joint Synchronisation - hier wird nur eine Ressource von allen Mobiles eines Clusters gemeinsam belegt - kombiniert werden.
- Wird mit unterschiedlichen Sendeleistungen gearbeitet, so muss man entweder für die Transmission der Sync. -Sequenz in ein separates Frequenzband ausweichen (und dort mit der max. Sendeleistung arbeiten) oder aber die Differenz zwischen max. und minimaler Sendeleistung im Leistungs-Budget berücksichtigen.

In mobilen Datenfunknetzen stellt insbesondere die Vereinigung zweier unabhängig voneinander aufsynchronisierter und damit in der Regel asynchroner Cluster hohe Anforderungen an die dezentrale Synchronisation. Erfindungsgemäß soll die Synchronisationsreichweite einer Station größer sein als die resultierende Reichweite der Nutzdaten. Die Überreichweite der Synchronisationsinformation definiert dabei die sogenannte Schutz-Zone, das vorteilhaft genutzt werden kann, um einen lokalen Gleichlauf bestimmter Systemparameter zu erzielen, bevor der Datenaustausch zwischen den Stationen des gleichen Clusters durch die Transmissionen einer oder mehrerer Stationen des zweiten, sich nähernden Clusters signifikant gestört wird. Das Ziel einer höheren Synchronisationsreichweite gegenüber der Datenfunkreichweite kann technisch durch folgende Verfahren (angewandt auf die Synchronisationsfolge) realisiert werden:

- höhere Sendeleistung
- niedigerer Modulationsindex
- höherer Spreizfaktor bei Einsatz von Bandspreiztechniken
- höhere Empfängerempfindlichkeit
- (optionale) Festlegung eines minimal benötigten Empfangspegels für die Datendetektion

Im folgenden wird eine weitere Ausführungsvariante vorgestellt:

Dezentrale Slot-Synchronisation für selbstorganisierende Datenfunknetze basierend auf dem slotted ALOHA-Verfahren

In einem Funksystem nach dem pure ALOHA-Verfahren sendet jeder Teilnehmer seine Daten sofort nach deren Generierung in Datenpaketen fester Länge. Da die aktuelle Belegung des Funkkanals nicht vor der Sendung überprüft wird, kann es leicht zu Kollisionen mit den Aussendungen von anderen Teilnehmern kommen. Zwei Datenpakete sind verloren, wenn sie kollidieren, d.h. sich auch nur geringfügig zeitlich überlappen.

Eine deutliche Verbesserung der Anzahl von erfolgreichen Übertragungen läßt sich dadurch erreichen, dass die Teilnehmer nur zu bestimmten Zeitpunkten senden dürfen. Diese Modifikation des pure ALOHA-Verfahrens wird als slotted ALOHA gezeichnet. Für slotted ALOHA halbiert sich im Vergleich zu pure ALOHA das Zeitintervall, in welchem zwei Datenpakete kollidieren können.

Ein Burst, der innerhalb eines Zeitschlitzes beim slotted *ALOHA* übertragen wird, könnte z.B. die in **Fig. 10** gezeigte Struktur aufweisen. Neben der eigentlichen Datensequenz, enthält der Burst noch zumindest eine zusätzliche Sequenz, die sowohl dem Sender auch als auch dem Empfänger bekannt ist und sowohl für die Synchronisation als auch die Kanalschätzung herangezogen werden kann. Abhängig von der Anordnung innerhalb des Bursts spricht man auch von einer Pre- oder Midamble. Die sogenannte Guard-Period (GP) dient der Kompensation von Laufzeitunterschieden, sowie Referenztakt-Toleranzen der Teilnehmer. Üblicherweise wird für die Synchronisation mit Signalspreiztechniken gearbeitet. Damit kann für die Synchronisation der Zeitschlitze, die unter Punkt 3 vorgestellte, dezentrale Slot-Synchronisation vorteilhaft eingesetzt werden.

Die oben beschrieben Figuren zeigen:

Fig. 1: eine Netzstruktur eines mobilen selbstorganisierenden Datenfunknetzes,

Fig. 2: ein erstes Beispiel zur Markierung der Synchronisationssequenz zur Rahmensynchronisation,

Fig. 3: ein zweites Beispiel zur Markierung der Synchronisationssequenz zur Rahmensynchronisation,

Fig. 4: ein Rahmenstruktur für den UTRA-TDD Modus (Low Chip Rate),

Fig. 5: -Teilbild A:
ein Beispiel einer sequentiellen dezentralen Synchronisation, - Teilbild B:
ein Beispiel einer gemeinsamen dezentralen Synchronisation,

Fig. 6: ein Beispiel zweier asynchroner Cluster,

Fig. 7: eine Darstellung einer aktiven Schutz-Zone und einer passiven Schutz-Zone,

Fig. 8: eine Darstellung einer aktiven Schutz-Zone und den Stör Reichweiten zu drei Mobilstationen $N_4$, $N_5$ und $N_6$,

Fig. 9: eine Darstellung einer passiven Schutz-Zone zu drei Mobilstationen $N_4$, $N_5$ und $N_6$,

Fig. 10: ein Rahmenstruktur für den UTRA-TDD Modus (Low Chip Rate).

**Patentansprüche**

1. Verfahren zur Synchronisation in einem zumindest teilweise selbstorganisierenden Funkkommunikationssystem mit einer Anzahl von Mobilstationen, welche in gegenseitiger Funkreichweite über eine Luftschnittstelle liegen,
   **dadurch gekennzeichnet,**
   **dass** zumindest einige Mobilstationen aus der Anzahl von Mobilstationen Synchronisationssequenzen übertragen, anhand deren sich ein Teil der oder alle Mobilstationen der Anzahl von Mobilstationen aufsynchronisieren.

2. Verfahren nach Anspruch 1,
   **dadurch gekennzeichnet,**
   **dass** die Synchronisationssequenzen Teil eines informationstragenden Datenpaketes sein.

3. Verfahren nach Anspruch 1,
   **dadurch gekennzeichnet,**
   **dass** die Synchronisationssequenzen in einem eigenen Synchronisationskanal übertragen werden.

4. Verfahren nach einem der Ansprüche 1 bis 3,
   **dadurch gekennzeichnet,**
   **dass** aufsynchronisierende Mobilstationen die Synchronisationslagen der anderen Mobilstationen detektieren und ihre eigene Synchronisationslage aus diesen ableiten.

5. Verfahren nach Anspruch 4,
   **dadurch gekennzeichnet,**
   **dass** eine Mobilstation für die Bestimmung der eigene Synchronisationslage die Güte der einzelnen detektierten Synchronisationslagen und/oder ihre vorhergehende Synchronisationslage berücksichtigt.

6. Verfahren nach einem der Ansprüche 1 bis 5,
   **dadurch gekennzeichnet,**
   **dass** Synchronisationsdaten im gleichen Burst, der auch die Nutzdaten trägt, erfolgt.

7. Verfahren nach einem der Ansprüche 1 bis 5,
   **dadurch gekennzeichnet,**
   **dass** die Synchronisationsdäten über einen weiteren vom eigentlichen Nutzdatenburst separierten Burst übertragen werden.

8. Verfahren nach einem der Ansprüche 1 bis 7,
   **dadurch gekennzeichnet,**
   **dass** die Synchronisationssequenzen zyklisch oder periodisch übertragen werden.

9. Verfahren nach einem der Ansprüche 1 bis 8,
   **dadurch gekennzeichnet,**
   **dass** zur Verbesserung der Synchronisation ein Maß für die Qualität der Referenz angegeben wird.

10. Verfahren nach einem der Ansprüche 1 bis 9,
    **dadurch gekennzeichnet,**
    **dass** die Synchronisationsdaten über einen weiteren vom eigentlichen Nutzdatenburst separierten Burst übertragen werden.

11. Verfahren nach einem der Ansprüche 1 bis 10,
    **dadurch gekennzeichnet,**
    **dass** eine Synchronisation für Zeitschlitze für eine Synchronisation von Zeitrahmen verwendet wird.

12. Verfahren nach einem der Ansprüche 1 bis 11,
    **dadurch gekennzeichnet**, innerhalb eines Zeitschlitzes nur eine Mobilstation den Sendebetrieb aufnimmt.

13. Mobilstation in einem zumindest teilweise selbstorganisierenden Funkkommunikationssystem,
    **dadurch gekennzeichnet,**
    **dass** Mittel zum Emfang von Synchronisationssequenzen einiger Mobilstationen aus einer Anzahl von Mobilstationen vorhanden sind, anhand deren sich die Mobilstation aufsynchronisiert.

14. Mobilstation nach Anspruch 13,
    **dadurch gekennzeichnet,**
    **dass** Mittel zum Emfang von Synchronisationssequenzen einiger Mobilstationen aus einer Anzahl von Mobilstationen vorhanden sind.

15. Funkkommunikationssystem mit mehreren Mobilstationen nach einem der Ansprüche 13 oder 14.

# FIG 1

# FIG 2

Beispiel 1:

Markierung der 1. Synchronisationssequenz

# FIG 3

Beispiel 2:

Markierung jeder Synchronisationssequenz

**FIG 4**

1.28Mcps

Subframe 5ms (6400 chip)

Switching Point

DwPTS
(96 chips)
GP (96 chips)
UpPTS
(160 chips)
Switching Point

**FIG 5A**

Sequential Decentral Synchronisation

Aktuelles Frame / Slot-Raster der Mobilstation

SYNC
Slot

Zeit

TSYNC,1                TSYNC,2        TSYNC,1

Korrelation der für den jeweiligen Slot gültigen
Midamblesequenz auf das Empfangssignal

**FIG 5B**

Joint Decentral Synchronisation

Aktuelles Frame/Slot-Raster der Mobilstation

Zeit

TSYNC,Joint       Korrelation der für alle Mobiles identischen
Sync-sequenz auf das Empfangssignal

FIG 6

Cluster 1 →

← Cluster 2

$N_1$  $N_2$  $N_3$

$N_4$  $N_5$  $N_6$

FIG 7

$N_1$  $r_S$  $E_S$
$r_D$
$E_D$

Aktive
Schutz-Zone

$E_D$  $N_1$  $r_S$  $E_S$
$r_D$

Passive
Schutz-Zone

## FIG 8

Stör Reichweite N5

$N_5$
$N_4$
$N_1$
$N_3$
$N_2$
$N_6$

$\xi_D$

$\delta_D + \xi_D$

Aktive Schutz-Zone

Stör Reichweite N6

Stör Reichweite N4

## FIG 9

Stör Reichweite N5

$N_3$
$N_5$
$N_4$
$N_1$
$N_2$
$N_6$

$\xi_0$

$\delta_0 + \xi_0$

Passive Schutz-Zone

Stör Reichweite N6

Stör Reichweite N4

## FIG 10

| Slot | | |
|---|---|---|
| Burst | | |
| Sync-Seq. | Data | Gp |

**Europäisches Patentamt**

# EUROPÄISCHER RECHERCHENBERICHT

Nummer der Anmeldung

EP 02 25 7475

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 02 065669 A (JARBOT LUTZ ;SCHMITZ HEIKO (DE); LEHMANN GERALD (DE); SIEMENS AG ()) 22. August 2002 (2002-08-22) * Seite 4, Zeile 12 - Seite 5, Zeile 8 * * Seite 8, Zeile 17 - Zeile 29 * * Seite 9, Zeile 4 - Zeile 7 * --- | 1,4-12 | H04B7/26 |
| X | WO 01 99330 A (ARNOLD JOERG ;MITSUBISHI INTERNAT GMBH (DE)) 27. Dezember 2001 (2001-12-27) * Seite 4, Absatz 2 - Absatz 4 * * Seite 12, Absatz 4; Anspruch 2 * --- | 1,3,7, 10-12 | |
| X | US 5 682 383 A (DAHOD ASHRAF MANSUR ET AL) 28. Oktober 1997 (1997-10-28) * Spalte 3, Zeile 11 - Zeile 20 * * Spalte 6, Zeile 1 - Zeile 3 * * Spalte 9, Zeile 32 - Zeile 44 * ----- | 1,2,6, 11,12 | |

RECHERCHIERTE SACHGEBIETE (Int.Cl.7)

H04B

Der vorliegende Recherchenbericht wurde für alle Patentansprüche erstellt

| Recherchenort | Abschlußdatum der Recherche | Prüfer |
|---|---|---|
| MÜNCHEN | 24. März 2003 | Fribert, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

**EP 1 416 648 A1**

EP 02 25 7475

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-03-2003

| Im Recherchenbericht angeführtes Patentdokument | | Datum der Veröffentlichung | Mitglied(er) der Patentfamilie | | Datum der Veröffentlichung |
|---|---|---|---|---|---|
| WO 02065669 | A | 22-08-2002 | DE | 10106807 A1 | 12-09-2002 |
| | | | EP | 1235364 A1 | 28-08-2002 |
| | | | WO | 02065669 A2 | 22-08-2002 |
| WO 0199330 | A | 27-12-2001 | AU | 6202901 A | 02-01-2002 |
| | | | WO | 0199330 A1 | 27-12-2001 |
| US 5682383 | A | 28-10-1997 | CA | 2157846 A1 | 10-03-1996 |
| | | | EP | 0701347 A2 | 13-03-1996 |

EPO FORM P0461

Für nähere Einzelheiten zu diesem Anhang : siehe Amtsblatt des Europäischen Patentamts, Nr.12/82